# EUROPEAN PATENT APPLICATION

(11) **EP 4 190 298 A1**
(43) Date of publication of application: **07.06.2023**
(21) Application number: 21856023.3
(22) Date of filing: 31.03.2021
(51) Int. Cl.: A61G 3/00, A61G 10/02, B60H 1/00, B60H 3/06

(54) **AMBULANCE HAVING INFECTIOUS DISEASE BLOCKING FUNCTION, AND INTERIOR PRESSURE CONTROL METHOD THEREFOR**

(30) Priority: 14.08.2020 KR 20200102622
(71) Applicant: Sehwa Motor Co., Ltd., Hwaseong-si, Gyeonggi-do 18269 (KR)
(72) Inventor: KIM, Dong Geun, Hwaseong-si Gyeonggi-do 18275 (KR); KANG, Seong Joo, Hwaseong-si Gyeonggi-do 18268 (KR)
(74) Representative: Manitz Finsterwald Patent- und Rechtsanwaltspartnerschaft mbB
(86) International application number: PCT/KR2021/003981
(87) International publication number: WO 2022/035014

(57) **Abstract**

The present invention relates to an ambulance having an infectious disease blocking function and an interior pressure control method therefor, the ambulance having a driver seat, a vehicle body and an emergency care compartment which is mounted on the vehicle body and which has a space in which a patient can be placed, and comprising an air pressure regulation part for setting the inside of the emergency care compartment to have a positive pressure or a negative pressure, and a control part for selectively controlling a positive pressure or a negative pressure of the air pressure regulation part.

## Description

### TECHNICAL FIELD

The present invention relates to an ambulance that is an equipped vehicle provided for transporting the sick and injured people to hospitals and providing emergency care, and to the ambulance and an interior pressure control method therefor, in which the ambulance has an emergency care compartment equipped with stretchers for patients, various medical devices, medicines, and the like and defining a space where it is possible to provide emergency care, and, in the vehicle during the transport from the scene of an incident to the hospitals, it is possible to provide emergency care or perform necessary treatment such as surgery.

### BACKGROUND ART

The ambulance transports patients and provides emergency care during the transport and prepares for treatment at the hospital through the use of advanced medical equipment and telemedicine. According to the condition of the patient, a vehicle transporting the injured patent, and a general ambulance not accompanied by a qualified physician are selectively dispatched. However, the ambulance has to be prepared for the unexpected situations. Various difficulties arise in transporting patients during earthquakes, large-scale fires, large-scale accidents, and large-scale infectious diseases such as MERS, SARS, and COVID-19. The ambulance can move through contaminated areas or transport various patients, and therefore, has to have various equipment and functions for emergency care and other procedures, and be convertible between negative and positive pressures according to the patient's condition, and it is also important to maintain disinfection and sterilization. However, unlike hospitals, in the ambulances where it is difficult to fix and install bulky equipment, it is not easy to perform sufficient sterilization. Therefore, it is necessary to provide a quick and simple disinfection and sterilization device.

In the case of a hospital operating room, it is very important to manage medical equipment and atmospheric environment in the operating room to prevent hospital infection. Because treatments involve wound exposed to the outside, blower is used to increase the atmospheric pressure to block contact with contaminants, and a filter is used for the incoming air. A laminar flow ventilation system is also provided to ensure that infection is prevented from pollutants even if outside air is introduced through the filter.

Meanwhile, in the case of respiratory diseases, reversely, germs are prevented from spreading from the patient to the outside using negative pressure equipment. By the `negative pressure,' it refers to pressure lower than of surroundings, which means that the pressure is lower than that of the outside, and it is required to prevent germs from being exposed outside the vehicle, thereby preventing the third or higher exponential epidemic.

The negative pressure device is a device that keeps germs only inside the vehicle, because external air, if allowed to enter the vehicle, is filtered to be unpolluted, and discharged air is also passed through the filter. Because ambulance transport a large number of patients, it should be able to be converted between negative and positive pressures according to the patient's condition, and in the case of general patients, it should be also able to apply normal atmospheric pressure, rather than positive or negative pressure. For the infectious diseases, the negative pressure to block viruses to outside is preferable, and for a burn patient, the positive pressure is preferable to prevent infection from external contaminants. In addition, once set, the internal pressure should be maintained uniformly by correcting the change in the internal pressure of the ambulance due to the speed of the vehicle.

### DETAILED DESCRIPTION OF INVENTION

### Technical Problem

The present invention has been proposed to solve the problems of the related art, and an object of the present invention is to provide an ambulance, and an interior pressure control method therefor, in which the ambulance is capable of easily changing between positive and negative pressures to block the inflow of germs from the outside or vice versa, and also blocking germs from a radiator of an air conditioner, that is, of air conditioner heater device and sterilizing the same.

### Technical Solution

The object of the present invention described above may be achieved by an ambulance having an infectious disease blocking function, which may include: an emergency care compartment with a space in which a patient can be placed; an air pressure control part that selects and sets an interior of the emergency care compartment from among positive pressure, negative pressure, and natural atmospheric conditions; a control part that selectively controls a pressure inside the emergency care compartment through the air pressure regulation part; a heating, ventilation, air conditioning system including an air conditioner and a heater; and a pressure sensor operated in response to the control part to detect the pressure inside the emergency care compartment, in which the air pressure control part includes a suction unit that supplies an external air into the emergency care compartment, and a discharge unit that discharges an air in the emergency care compartment to an outside, and the suction unit is connected to the heating, ventilation, air conditioning system, and a cooling or heating air supplied from the heating, ventilation, air conditioning system flows into the emergency care compartment through the suction unit.

The control part may be connected to a pressure sensor that senses a pressure inside the emergency care compartment, and control an on-off or an air movement speed of the suction part and the discharge part, the suction part increases the suction air movement speed faster than the discharge part so as to form a negative pressure, and the discharge part increases the discharge air movement speed faster than the suction part so as to form a positive pressure.

The suction part or the discharge part may each include: a container having openings formed in front and rear sides and having a passage therein; a drive part including a fan and a motor, the drive part mounted inside the container to exert suction power; a cover hinged to the front opening of the container to control an opening rate; and a HEPA filter hinged to the rear opening of the container and purifying moving air.

The ambulance may include a ventilation part formed on a side of the container, and a cover hinged to the suction part to control an opening rate of the ventilation part.

The suction part may be formed on one upper side of a wall surface of the emergency care compartment, the discharge part may be formed at a position opposite to the suction part and is formed on a lower part of the wall surface of the emergency care compartment, and directly intakes outside air or supplies cooling or heating air through the heating, ventilation, air conditioning system.

The control part may increase a suction fan speed of the suction part faster than the discharge part or increase an opening rate of a side ventilation part so as to form a positive pressure inside the emergency care compartment, thereby controlling the interior pressure for the emergency care compartment.

The control part may increase a discharge fan speed of the discharge part faster than the suction part or increase an opening rate of a ventilation part formed on a side of the discharge part so as to form a negative pressure inside the emergency care compartment, thereby controlling the interior pressure for the emergency care compartment.

The control part may cause ventilation to be performed by maintaining the same amount of suction and discharge of the suction part and the discharge part, thereby controlling the interior pressure for the emergency care compartment.

The control part may maintain the suction part and the discharge part in an open state and stops a fan to maintain a natural atmospheric condition, thereby controlling the interior pressure for the emergency care compartment.

The above object can be achieved by using the ambulance equipped with the infectious disease blocking function of the present invention, by a method of controlling an operation of the air pressure regulation part to compensate for a change in pressure inside the emergency care compartment according to the change in vehicle speed.

The operation of the air pressure regulation part may include receiving a signal from a pressure sensor that senses the pressure inside the emergency care compartment and transmitting the received signal to the control part, and driving according to a signal from the control part.

The method may include: when the pressure inside the emergency care compartment is set at the positive pressure and the speed of the vehicle is low, opening the suction part to increase the pressure inside the emergency care compartment; and when the pressure sensor detects that the pressure reached a set pressure, closing the suction part and maintaining the pressure in a stable state.

The method may include: when the pressure inside the emergency care compartment is set at the negative pressure and the speed of the vehicle is high, opening the discharge part to decrease the pressure inside the emergency care compartment; and when the pressure sensor detects that the pressure reached a set pressure, closing the discharge part and maintaining the pressure in a stable state.

### Advantageous Effects

According to the present invention, it is easy to change between the positive pressure and the negative pressure inside the ambulance emergency care compartment, and it is possible to block external inflow of germs into the emergency care compartment or vice versa.

In addition, according to the present invention, there is an advantage in that it is possible to treat germs collected in the filter in the ambulance emergency care compartment, and there is an advantage in that quarantine, sterilization, and disinfection in the emergency care compartment can be performed through germ sterilization of the medicine cabinet and facilities installed in the patient room in the emergency care compartment, and germ blocking and sterilization of the heating, ventilation, air conditioning system in the emergency care compartment are enabled.

### BRIEF DESCRIPTION OF THE DRAWINGS

FIG. 1 is a perspective view showing an 'emergency care compartment' of an ambulance according to the present invention.
FIG. 2 is a front sectional view showing the 'emergency care compartment' of the ambulance according to the present invention.
FIG. 3 is a perspective view showing an 'air pressure regulation part' of an ambulance according to the present invention.
FIG. 4 is a perspective view showing the 'air pressure regulation part' of the ambulance viewed from another direction, according to the present invention.
FIG. 5 is a flow chart showing a control method of an air pressure regulation part in response to sensing a vehicle speed of the ambulance according to the present invention.

### BEST MODE FOR EMBODYING INVENTION

An ambulance having an infectious disease blocking function according to the present invention includes: an emergency care compartment with a space in which a patient can be placed; an air pressure regulation part that selects and sets an interior of the emergency care compartment from among positive pressure, negative pressure, and natural atmospheric conditions; a control part that selectively controls a pressure inside the emergency care compartment through the air pressure regulation part; a heating, ventilation, air conditioning system including an air conditioner and a heater; and a pressure sensor operated in response to the control part to detect the pressure inside the emergency care compartment, in which the air pressure regulation part includes a suction part that supplies an external air into the emergency care compartment, and a discharge part that discharges an air in the emergency care compartment to an outside, and the suction part is connected to the heating, ventilation, air conditioning system, and a cooling or heating air supplied from the heating, ventilation, air conditioning system flows into the emergency care compartment through the suction part.

### MODE FOR EMBODYING INVENTION

Hereinafter, preferred embodiments of the present disclosure will be described in detail with reference to the accompanying drawings.

The terms to be described below are defined in consideration of functions in the present disclosure, and it is noted that they should be interpreted as a concept consistent with the technical idea of the present disclosure and a meaning commonly or generally recognized in the art.

Further, in the following description of the present disclosure, a detailed description of known functions and configurations incorporated herein will be omitted when it may make the subject matter of the present disclosure rather unclear.

Here, the accompanying drawings are partially exaggerated or simplified for convenience and clarity of explanation and understanding of the configuration and operation of the technology, and each component does not exactly match the actual size.

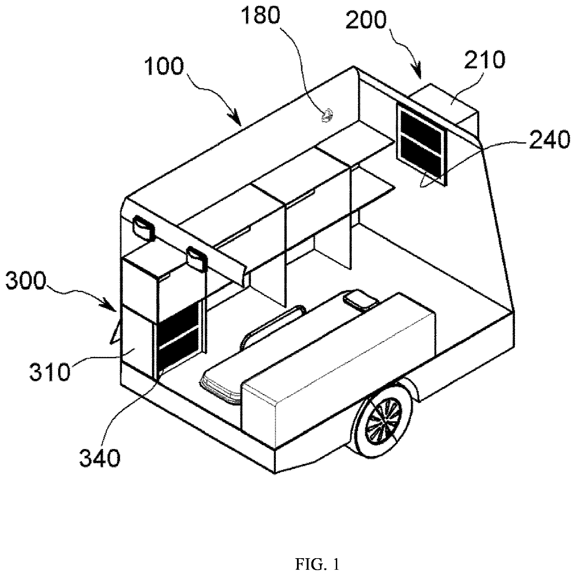

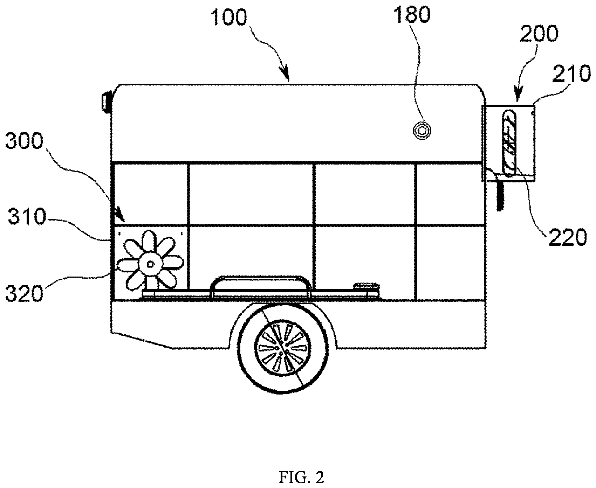

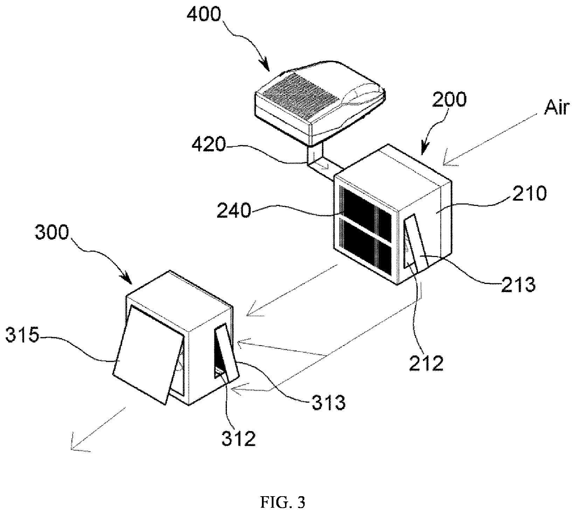

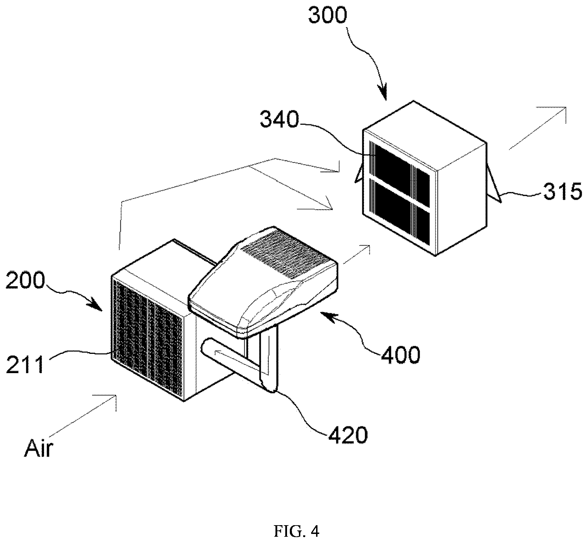

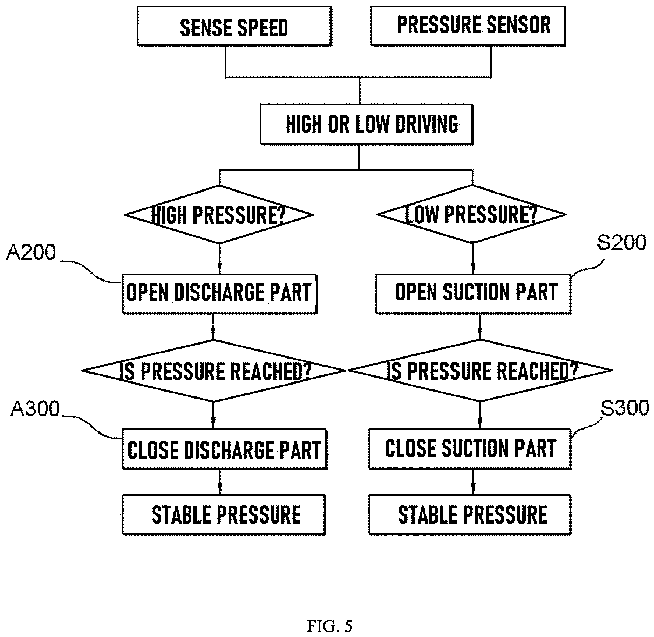

In the accompanying drawings, FIG. 1 is a perspective view showing an 'emergency care compartment' of an ambulance according to the present invention, FIG. 2 is a front sectional view showing the 'emergency care compartment' of the ambulance according to the present invention, FIG. 3 is a perspective view showing an 'air pressure regulation part' of an ambulance according to the present invention, FIG. 4 is a perspective view showing the 'air pressure regulation part' of the ambulance viewed from another direction, according to the present invention, and FIG. 5 is a flowchart chart showing a control method of an air pressure regulation part in response to sensing a vehicle speed of the ambulance according to the present invention.

As shown in FIGS. 1 to 4, the ambulance according to the present invention is provided with a driver seat, a vehicle body, and an emergency care compartment 100 mounted on the vehicle body and having a space in which a patient can be placed, and includes an air pressure regulation part for setting the inside of the emergency care compartment 100 to a positive pressure or a negative pressure, and a control part for selectively controlling the positive pressure or the negative pressure of the air pressure regulation part.

The air pressure regulation part includes: a suction part 200 that directly intakes outside air, or that is connected to a heating, ventilation, air conditioning system 400 including an air conditioner and a heater provided in the vehicle so as to supply cooling and heating air, and a discharge part 300 that discharges the air in the emergency care compartment 100 to the outside.

The control part controls the on/off and air movement speed of the suction part 200 or the discharge part 300. A pressure sensor 180 is provided, which is operated in response to the control [36] part so as to detect the pressure inside the emergency care compartment 100. That is, the suction part 200 may form a negative pressure inside the emergency care compartment 100 when the suction air movement speed is increased faster than the discharge part 300, and reversely, the discharge part 300 may form a positive pressure inside the emergency care compartment 100 when the discharge air movement speed is increased faster than the suction part 200.

The suction part 200 or the discharge part 300 each includes: a container 210 and 310 having openings formed in front and rear sides and having a passage therein; a drive part 220 and 320 including a fan and a motor, the drive part 220 and 320 being mounted inside the container 210 and 310 to exert suction power; a cover 230 and 330 hinged to the front opening of the container 210 and 310 to control an opening rate; and a HEPA filter 240 and 340 hinged to the rear opening of the container 210 and 310 and purifying moving air.

The container 210 and 310 have a substantially rectangular box shape, and includes, mounted therein, the drive part 220 and 320 including the fan and the motor, a mesh net 211 attached to the front opening to block inflow of foreign substances, and the HEPA filter 240 and 340 mounted to the rear opening.

Of course, a filter may also be mounted on the front opening of the container 210 and 310, and a shield cover 315, which is openable, may be hinged to the rear opening.

The opening rate of the shield cover 315 may be controlled by the control part to adjust an amount of air transfer. Alternatively, the opening rate of the shield cover 315 may also be adjusted manually.

Further, it includes a ventilation part 212 and 312 formed on a side of the container 210 and 310 and a suction hinged cover 213 and 313 that controls the opening rate of the ventilation part 212 and 312.

At the ventilation part 212 and 312, the cover 213 and 313 may be opened to allow outside air to flow in, or the cover 213 and 313 may be closed to block outside air from flowing in.

Preferably, a duct 420 of the heating, ventilation, air conditioning system 400 provided in the emergency care compartment or vehicle is connected to a side of the container 210 of the suction part 200, and the cooling or heating air supplied from the heating, ventilation, air conditioning system may flow into the emergency care compartment through the suction part.

The heating, ventilation, air conditioning system 400 of patients and paramedics operates a blower motor through an evaporator and a heater core.

The evaporator and the heater core are components with dense gaps similar to those of honeycombs, and cause the air in the room to be repeatedly circulated.

In this case, it is very likely that, depending on the flow of air, the indoor contaminants are gathered in the core or dust and foreign substances are continuously attached, serving as a hiding place for contaminants, and contaminated bacteria from patients with infectious diseases can continuously cause cross infection.

Accordingly, in the present invention, the duct 420 of the heating, ventilation, air conditioning system 400 is connected to the suction part 200 such that hot air or cold air passed through the heating, ventilation, air conditioning system 400 can be introduced into the container 210 of the suction part 200, mixed with external air, and then regulated to an appropriate temperature and supplied into the emergency care compartment 100 to cool or heat the same, in which the air introduced through the heating, ventilation, air conditioning system 400 is also passed through the HEPA filter, such that sterilized clean air can be supplied.

Meanwhile, the suction part 200 is formed on one side of an upper wall surface of the emergency care compartment 100, and the discharge part 300 is formed at a position opposite to the suction part 200, and on a lower part of the wall surface of the emergency care compartment 100.

Therefore, after the clean air is introduced from the suction part 200 mounted on the upper part of the front wall, the air filled in the emergency care compartment 100 is discharged through the discharge part 300 mounted on the lower part of the side wall.

That is, since the old air remaining in the emergency care compartment 100 often sinks to the floor, the discharge part 300 is formed at the lower part to facilitate discharging the old air.

The control method of the ambulance configured as described above according to the present invention will be described as follows.

First, in order to control the interior pressure of the emergency care compartment 100 of the ambulance in the positive pressure, the suction part 200 increases the speed of the suction fan faster than the discharge part 300 or increases the opening rate of the side ventilation part 212 and 312 so as to form the positive pressure inside the emergency care compartment.

Next, in order to control the interior pressure of the emergency care compartment 100 of the ambulance in the negative pressure, the exhaust fan speed of the discharge part 300 is increased faster than the suction part 200 or the opening rate of the side ventilation part 212 and 312 is increased so as to form the emergency care compartment 100 in the negative pressure.

In order to control the emergency care compartment 100 of the ambulance in an interior ventilation condition, ventilation is performed by maintaining the same amount of suction and discharge of the suction part 200 and the discharge part 300. Therefore, by maintaining intensive disinfection with an interior disinfectant without allowing external leakage, and after disinfection is completed, by driving the suction part 200 and the discharge part 300 with the full suction and exhaust powers, fast ventilation is enabled, so that vehicle operation rate and cross infection prevention can be improved.

In order to control the interior of the emergency care compartment 100 of the ambulance in the natural atmospheric condition, the suction part 200 and the discharge part 300 may be kept open and the fan may be stopped so as to maintain the natural atmospheric condition.

The increase or decrease of the air conveying speed of the suction part 200 or the discharge part 300 may be regulated by controlling the respective fan speed.

Meanwhile, FIG. 5 is a flowchart chart showing a control method of the air pressure control part in response to sensing a vehicle speed of the ambulance according to the present invention.

As shown in FIG. 5, the present invention controls the operation of the air pressure regulation part to correct the change in the pressure inside the emergency care compartment in response to a change in the speed of the vehicle.

The operation of the air pressure regulation part includes receiving a signal from the pressure sensor 180 detecting the pressure inside the emergency care compartment 100 and transmitting the received signal to the control part, and driving according to a signal from the control part.

The speed of the vehicle is transmitted from an electronic control part (ECU) to the control part, and is also programmed to be operated in response to the pressure sensor 180.

A signal from the speed sensor is received and a signal from the pressure sensor 180 is received (S 100).

When the pressure inside the emergency care compartment 100 is set at the positive pressure and the speed of the vehicle is low, the suction part 200 is opened to increase the pressure inside the emergency care compartment 100 (S200).

When the pressure sensor 180 detects that the pressure inside the emergency care compartment 100 reached the set pressure, the suction part 200 is closed and the pressure is maintained in a stable state (S300).

On the other hand, when the pressure inside the emergency care compartment is set at the negative pressure and the speed of the vehicle is high, the discharge part 300 is opened to decrease the pressure inside the emergency care compartment 100 (A100).

When the pressure sensor 180 detects that the pressure inside the emergency care compartment 100 reached the set pressure, the discharge part 300 is closed and the pressure is maintained in a stable state (A300).

The present disclosure is not limited by the embodiments described above and the accompanying drawings, and various modifications and applications not illustrated within the scope not departing from the technical spirit of the present disclosure are possible, as well as substitution of components and change to other equivalent embodiments are possible, and accordingly, contents related to modifications and applications of the features of the present disclosure should be construed to be included in a scope of the present disclosure.

### Industrial Applicability

The present invention relates to an ambulance having an infectious disease blocking function and an interior pressure control method therefor, and can be used for an ambulance that is an equipped vehicle provided to transport the sick and injured people to hospitals and to provide emergency care.

## Claims

1. An ambulance with infectious disease blocking function, comprising:
an emergency care compartment with a space in which a patient can be placed;
an air pressure regulation part that selects and sets an interior of the emergency care compartment from among positive pressure, negative pressure, and natural atmospheric conditions;
a control part that selectively controls a pressure inside the emergency care compartment through the air pressure regulation part; a heating, ventilation, air conditioning system including an air conditioner and a heater; and
a pressure sensor operated in response to the control part to detect the pressure inside the emergency care compartment, wherein
the air pressure regulation part includes a suction part that supplies an external air into the emergency care compartment, and a discharge part that discharges an air in the emergency care compartment to an outside, and
a duct of the heating, ventilation, air conditioning system including the air conditioner and the heater provided in the vehicle is connected to the suction part, and a cooling or heating air supplied from the heating, ventilation, air conditioning system flows into the emergency care compartment through the suction part.

2. The ambulance according to claim 1, wherein
the control part is connected to a pressure sensor that senses a pressure inside the emergency care compartment, and
controls an on-off or an air movement speed of the suction part and the discharge part,
the suction part increases the suction air movement speed faster than the discharge part so as to form a negative pressure, and
the discharge part increases the discharge air movement speed faster than the suction part so as to form a positive pressure.

3. The ambulance according to claim 2, wherein the suction part or discharge part each comprises:
a container having openings formed in front and rear sides and having a passage therein;
a drive part including a fan and a motor, the drive part mounted inside the container to exert suction power;
a cover hinged to the front opening of the container to control an opening rate; and
a HEPA filter hinged to the rear opening of the container and purifying moving air.

4. The ambulance according to claim 3, further comprising: a ventilation part formed on a side of the container, and a cover hinged to the suction part to control an opening rate of the ventilation part.

5. The ambulance according to claim 1, wherein
the suction part is formed on one upper side of a wall surface of the emergency care compartment,
the discharge part is formed at a position opposite to the suction part and is formed on a lower part of the wall surface of the emergency care compartment,
the suction part is connected to a duct of the heating, ventilation, air conditioning system including the air conditioner and the heater provided in the vehicle, and
the cooling or heating air supplied from the heating, ventilation, air conditioning system is introduced into the emergency care compartment through the suction part.

6. The ambulance according to claim 1, wherein the control part increases a suction fan speed of the suction part faster than the discharge part or increases an opening rate of a side ventilation part so as to form a positive pressure inside the emergency care compartment, thereby controlling the interior pressure for the emergency care compartment.

7. The ambulance according to claim 1, wherein the control part increases a discharge fan speed of the discharge part faster than the suction part or increases an opening rate of a ventilation part formed on a side of the discharge part so as to form a negative pressure inside the emergency care compartment, thereby controlling the interior pressure for the emergency care compartment.

8. The ambulance according to claim 1, wherein the control part causes ventilation to be performed by maintaining the same amount of suction and discharge of the suction part and the discharge part, thereby controlling the interior pressure for the emergency care compartment.

9. The ambulance according to claim 1, wherein the control part maintains the suction part and the discharge part in an open state and stops a fan to maintain a natural atmospheric condition, thereby controlling the interior pressure for the emergency care compartment.

10. A method for controlling an interior pressure of an ambulance having an infectious disease blocking function, the method using the ambulance with infectious disease blocking function according to any one of claims 1 to 9 and comprising:
controlling an operation of the air pressure regulation part to compensate for a change in pressure inside the emergency care compartment according to the change in vehicle speed.

11. The method according to claim 10, wherein the operation of the air pressure regulation part comprises receiving a signal from a pressure sensor that senses the pressure inside the emergency care compartment and transmitting the received signal to the control part, and driving according to a signal from the control part.

12. The method according to claim 11, comprising:
when the pressure inside the emergency care compartment is set at the positive pressure and the speed of the vehicle is low, opening the suction part to increase the pressure inside the emergency care compartment; and
when the pressure sensor detects that the pressure reached a set pressure, closing the suction part and maintaining the pressure in a stable state.

13. The method according to claim 11, comprising:
when the pressure inside the emergency care compartment is set at the negative pressure and the speed of the vehicle is high, opening the discharge part to decrease the pressure inside the emergency care compartment; and
when the pressure sensor detects that the pressure reached a set pressure, closing the discharge part and maintaining the pressure in a stable state.
